# EUROPEAN PATENT SPECIFICATION

(11) **EP 1 969 012 B1**
(45) Date of publication and mention of the grant of the patent: **13.08.2014**
(21) Application number: 05844817.6
(22) Date of filing: 30.12.2005
(51) Int. Cl.: C08B 11/02

(54) **METHOD FOR PREPARATION OF HYDROXYALKYLALKYLCELLULOSE ETHERS WITH HIGH YIELD**
VERFAHREN ZUR HERSTELLUNG VON HYDROXYALKYLALKYLCELLULOSEETHERN MIT HOHER AUSBEUTE
METHODE DE PREPARATION D'ETHERS D'HYDROXYALKYLALKYCELLULOSE A UN RENDEMENT ELEVE

(43) Date of publication of application: 17.09.2008
(73) Proprietor: Samsung Fine Chemicals Co., Ltd., Nam-gu, Ulsan-city 680-090 (KR)
(72) Inventor: KIM, Seok Soo, Daejeon 305-752 (KR); KIM, Ung-jin, Daejeon 305-752 (KR); LEE, Il Yong, Daejeon 305-380 (KR); HWANG, Hee Won, Daejeon 302-726 (KR); JANG, Yong Sung, Daejeon 305-380 (KR)
(74) Representative: WSL Patentanwälte Partnerschaft mbB
(86) International application number: PCT/KR2005/004663
(87) International publication number: WO 2007/078015

(56) References cited:
- JP-A- 60 192 702
- US-A- 4 477 657
- US-A- 4 661 589
- PLANK J: "Applications of bipolymers and other biotechnological products in building materials", APPLIED MICROBIOLOGY AND BIOTECHNOLOGY, SPRINGER VERLAG, BERLIN, DE, vol. 66, 1 January 2004 (2004-01-01), pages 1-9, XP003015690, ISSN: 0175-7598, DOI: DOI:10.1007/S00253-004-1714-3

## Description

### BACKGROUND OF THE INVENTION

### Field of the Invention

The present invention relates to a method for preparing hydroxyalkylalkylcellulose with high yield. More particularly, the present invention relates to a method for reparing hydroxyalkylalkylcellulose with high yield, with at least 60 % of alkoxy and hydroxyalkoxy substitution, by treating finely ground pulp with an alkali metal hydroxide at room temperature, reacting it with an alkylene oxide and an alkyl halide, and then adding an alkali metal hydroxide and an alkyl halide thereto. The method of the present invention is highly economical and environment-friendly due to the great reduction in waste of the reactants.

### Description of the Related Art

Hydroxyalkylalkylcellulose is known very useful as a joint compound, and a material for preparing tile cement and surfactants.

Hydroxyalkylalkylcellulose is a very useful compound used as an aid or an additive of medicines, construction materials paints, etc. In particular, due to its good solubility in water and thickening property, hydroxyalkylalkylcellulose is a very useful water-soluble cellulose ether available from a natural material, which is widely used in preparation and emulsion polymerization of cement, plaster and mortar in the field of petroleum industry and the like.

The conventional preparation methods of hydroxyalkylalkylcellulose are as follows.

In U.S. Patent No. 4,477,657, finely ground linter pulp was treated with 50 wt% alkali metal hydroxide, reaction was performed for 45 min after heating to 85 °C and continuously adding propylene oxide over a 45-min period and reaction was performed for 2 hrs at 85 °C after continuously adding methyl chloride over a 60-min period to attain a methoxyl substitution of 17 %, a hydroxypropoxyl substitution of 24.8 %, a methyl chloride efficiency of 37.8 % and a propylene oxide efficiency of 26.2 %. And, finely ground cotton linter was treated with 50 wt% alkali metal hydroxide, reaction was performed for 30 min at 90 °C after heating to 85 °C and adding propylene oxide over a 15-min period and reaction was performed for 30 min at 80-90 °C after adding 50 wt% alkali metal hydroxide solution and adding methyl chloride over a 30-min period to attain a methoxyl substitution of 28.0 %, a hydroxypropoxyl substitution of 12.3 %, a methyl chloride efficiency of 42.1 % and a propylene oxide efficiency of 49.0 %. However, this method is disadvantageous in that the alkylene efficiency and the degree of hydroxyalkoxy substitution are low.

In U.S. Patent No. 4,661,589, the following method is used to solve the low efficiency problem. Finely ground cotton linter was treated with a 50 wt% alkali metal hydroxide solution and the reaction mass was maintained at 60 °C for 15 min. Then, after lowering the pressure to 200 mmHg, propylene oxide was continuously added in vapor phase, very slowly and in small quantity. Then, dimethyl ether was slowly added as diluent gas over a 30-min period. After raising the temperature to 80 °C, reaction was performed for 30 min. And, a 50 wt% alkali metal hydroxide solution was added and methyl chloride was added in very small quantity. Subsequently, reaction was performed at 80 °C for 1 hr to attain a methoxyl substitution of 19.3 %, a hydroxypropoxyl substitution of 27.5 %, a methyl chloride efficiency of 52.4 % and a propylene oxide efficiency of 44.7 %. Although this method gives slightly improved methyl chloride efficiency and propylene oxide efficiency, the continuous addition of the reactants requires a long production time, and thus it is difficult to be applied commercially.

In Korean Patent No. 511087, alkali metal hydroxide was added in a batch, rather than continuously, two times in order to reduce the production time. During the first addition of the alkali metal hydroxide, alkylene oxide was added in a batch, and during the second addition of the alkali metal hydroxide, alkyl halide was added in a batch. And, after the first reaction of the alkali metal hydroxide, a mixture of diluent gas comprising dialkyl ether was added. With this improvement, the crystalline structure of cellulose was effectively weakened within a short period of time and the production time was reduced. But, improvement of the alkylene oxide efficiency was only slight and the alkyl halide efficiency was hardly improved.

### SUMMARY OF THE INVENTION

It is an object of the present invention to provide a method for preparation of hydroxyalkylalkylcellulose with high yield, which is very economical and environment-friendly, with a simplified preparation process, reduced reaction time and a greatly reduced amount of waste of reactants.

### DETAILED DESCRIPTION OF THE PREFERRED EMBODIMENTS

The present invention provides a method of preparing hydroxyalkylalkylcellulose by reaction of cellulose with an etherification agent, which comprises:
performing a first reaction by adding 0.5-4 moles of an alkali metal hydroxide per 1 mole of cellulose, agitating the mixture followed by adding 0.5-3 moles of an alkylene oxide per 1 mole of the cellulose, and adding 50-90 wt% of alkyl halide with reference to the total amount of alkyl halide added through the first and second reactions; and
performing a second reaction by adding 1-4 moles of an alkali metal hydroxide per 1 mole of the cellulose, dispersing the mixture followed and then adding the remainder of the total amount of alkyl halide.

The present invention is characterized in that the alkyl halide is added two times with an interval in order to improve not only alkylene oxide efficiency but also water retention ability and processing time of the final product. The addition proportion of the alkyl halide has been optimized to achieve the purpose.

Cellulose is treated with an alkali metal hydroxide prior to the reaction with alkylene oxide. Cellulose has three hydroxyl groups that are susceptible to chemical substitutions. Since the cellulose chains are strongly bound to one another by the hydrogen bonding of the hydroxyl groups, cellulose is not dissolved or modified by water or other hydrophilic substances. Thus, the hydroxyl groups need to be activated for a chemical reaction to be proceeded. As a catalyst, alkali metal hydroxide breaks the bonding to activate the hydroxyl groups. Therefore, the alkali metal hydroxide determines the degree of substitution, and thus, the particular chemicals to be substituted are determined. Industrially utilized cellulose derivatives are classified depending on their DS [degree of substitution; number of substituents, e.g., methyl chloride, bonded to the cellulose anhydrous glucose unit (AGU)] value. If all the three hydroxyl groups are substituted, the DS value is 3, which is the maximum value. When some chemicals that have reactive hydroxyl groups, e.g., propylene oxide, react with cellulose, two or three chains, not one, may be formed as the hydroxyl groups are activated. The degree of such reaction is expressed in mole number of substituents per 1 mole of AGU and is denoted as MS (molar substitution). Consequently, the water-insoluble cellulose becomes water-soluble and industrially available. The degree of hydrophilicity and hydrophobicity varies depending on the proportion of the substituents and the degree and type of the bonding, thereby determining the properties when admixed with cement, plaster, sand, etc. The present invention aims at controlling the physical properties while reducing production cost and improving production yield.

Hereunder is given a more detailed description of the present invention.

In the present invention, an alkali metal hydroxide and an alkyl halide are added two times with a certain interval for preparation of hydroxyalkylalkylcellulose with high yield.

The degree of substitution varies depending upon the amount of the alkali metal hydroxide, which is very important to obtain products having ideal properties. The alkali metal hydroxide is added to weaken the rigid crystal structure of cellulose for easier reaction of the finely ground cellulose with the etherification agent. An alkali metal hydroxide in the form of solid or an aqueous solution may be used. In general, sodium hydroxide (caustic soda), potassium hydroxide, lithium hydroxide, etc., are used. The alkali metal hydroxide facilitates bonding or reaction with various chemicals by binding to cellulose and expanding the crystal structure. The alkali metal hydroxide is added in an amount of about 0.5-4 moles, preferably about 0.5-2 moles, per 1 mole of cellulose at 15-60 °C. It is important that the alkali metal hydroxide is sprayed so that it can be uniformly dispersed in the cellulose. If the amount added of the alkali metal hydroxide is less than 0.5 mole per 1 mole of cellulose, the crystal structure of the cellulose is not weakened sufficiently, so that a wanted degree of substitution and efficiency cannot be attained. In contrast, if it exceeds 4 moles per 1 mole of cellulose, side reaction, e.g., production of polypropylene glycol, dominates over the reaction of the alkylene oxide with cellulose, there by reducing the degree of substitution and efficiency.

If agitation is performed for a while after the addition of the alkali metal hydroxide, the cellulose becomes easily reactable with the alkylene oxide. Then, a diluent gas is fed and agitation is performed from about 10 min to about 1 hr, so that the cellulose reacts uniformly. The diluent gas is not particularly limited, but a diluent gas comprising 65-95 wt% of a dialkyl ether and 5-35 wt% of at least one gas selected from the group consisting of methyl chloride, ethyl chloride and propyl chloride is preferable.

The alkylene oxide is added in the amount of 0.3-3 moles, more preferably 1-2.5 moles, per 1 mole of the cellulose in a batch, depending on the wanted degree of substitution. 50-90 wt% of alkyl halide with reference to the total amount of alkyl halide added through the first and second reactions is added and reaction is performed at 60-110 °C, preferably at 60-90 °C, so that the alkylene oxide and the alkyl halide are bonded to the cellulose. For the alkylene oxide, one having 2-5 carbon atoms in the alkylene group, preferably propylene oxide, is used. As for the alkyl halide, one having 1-24 carbon atoms in the alkyl group, preferably methyl chloride, is used. If the amount of the alkyl halide added is below 20 wt% of the total amount of alkyl halide, the degree of substitution of the alkyl halide becomes low. In contrast if it exceeds 95 wt%, improvement of the alkylene oxide efficiency is not so high and the property of the product may be changed. The reaction is performed for from 30 min to 2 hrs, preferably from 45 min to 2.5 hrs.

When the reaction with the alkylene oxide and alkyl halide is completed, unreacted hydroxyl groups of the cellulose crystal is treated with an alkali metal hydroxide. It is important that the alkali metal hydroxide is sprayed uniformly at an amount of 1-4 moles per 1 mole of the cellulose. If the amount added of the alkali metal hydroxide is below 1 mole per 1 mole of the cellulose, the degree of alkoxy substitution and efficiency are low. In contrast, if it exceeds 4 moles, it is uneconomical and excessive moisture may facilitate generation of salts, reducing efficiency of alkylene oxide and alkyl halide. The first amount of the alkali metal hydroxide added is very important in determining the alkylene oxide efficiency. Preferably, the first amount added is 20-70 wt% of the total amount added. After treatment with the alkali, the hydroxyl groups in the cellulose are completely exposed to an environment outside of the crystal structure and may easily react with the alkyl halide, etc. Then, the alkyl halide (generally, methyl chloride, etc.) is added in the amount of the remainder of the total amount added and reaction is performed at 70-120 °C, preferably at 80-100 °C, for about 1 hr to obtain hydroxyalkylalkylcellulose having a wanted degree of substitution with high yield.

The resultant hydroxyalkylalkylcellulose has not only a uniform degree of substitution but a superior purity, with insoluble ingredients less than 0.02 wt%. And, it has a degree of alkoxy substitution of 15-35 %, a degree of hydroxyalkoxy substitution of 2-30 %, preferably 3-25 %, an alkyl halide efficiency of 60-70 % and an alkylene oxide efficiency of 60-75 %.

The hydroxyalkylalkylcellulose prepared in accordance with the present invention has superior properties to be used as joint compounds, tile cements and surfactants.

### EXAMPLES

Hereinafter, the present invention is described in further detail through examples. However, the following examples are only for the understanding of the present invention and they should not be construed as limiting the scope of the present invention.

### Preparation Example 1: Preparation of hydroxypropylmethylcellulose

Into a horizontal/vertical agitation type high-pressure reactor was added 6 kg of finely ground natural pulp. At room temperature, 5.1 kg of a 50 wt% caustic soda solution was uniformly sprayed to through a spray nozzle, while agitating the reaction mass. 5.3 kg of a mixture gas of 95 wt% dimethyl ether and 5 wt% methyl chloride was added as diluent gas. Subsequently, 0.68 kg of propylene oxide and 4.1 kg of methyl chloride were added simultaneously and the reaction mixture was well agitated. After raising the temperature of the reactor to 90 °C, reaction was performed at that temperature for 1 hr. The pressure inside the reactor was 10 kg/cm² or less.

After the reaction was completed, the reactor was cooled to 50 °C over a 10-min period and 4.9 kg of a 50 wt% caustic soda solution was uniformly sprayed and 2.0 kg of methyl chloride was added. Then, the temperature was raised to 90 °C and reaction was performed for 30 min. After the reaction was completed, the pressure was lowered and the reaction mass was filtered with boiling water, dried and ground to obtain the hydroxypropylmethylcellulose of Example 1.

Examples 2 to 8 were performed in the same manner as in Example 1, except that the amount of caustic soda and methyl chloride added was changed as given in Table 1 below. Comparative Examples 1 to 3 were performed in the same manner as in Example 1, except that caustic soda and methyl chloride were not added separately.

**Table 1**

| | Amount of caustic soda added (kg) | | Amount of methyl chloride added (kg) | |
|---|---|---|---|---|
| | First addition | Second addition | First addition | Second addition |
| Example 1 | 5.1 | 4.9 | 4.1 | 2.0 |
| Example 2 | 5.1 | 4.9 | 4.5 | 1.6 |
| Example 3 | 5.1 | 4.9 | 5.0 | 1.1 |
| Example 4 | 5.1 | 4.9 | 5.5 | 0.6 |
| Example 5 | 6.0 | 4.0 | 4.1 | 2.0 |
| Example 6 | 6.0 | 4.0 | 4.5 | 1.6 |
| Example 7 | 6.0 | 4.0 | 5.0 | 1.1 |
| Example 8 | 6.0 | 4.0 | 5.5 | 0.6 |
| Comparative Example 1 | 10.0 | 0.0 | 8.5 | 0.0 |
| Comparative Example 2 | 11.0 | 0.0 | 9.5 | 0.0 |
| Comparative Example 3 | 4.5 | 5.0 | 0.0 | 7.0 |

### Testing Example 1: Measurement of degree of substitution, efficiency and content of water-insoluble substances

The degree of methoxyl substitution and the degree of hydroxypropoxyl substitution were measured by gas chromatography and the efficiency of methyl chloride and propylene oxide was determined by calculating the proportion of substitution. The content of water-insoluble substances was determined using a turbidity meter and the viscosity was measured with a 2 % (w/v) aqueous solution using a Brookfield viscometer at 20 °C and 20 rpm. The result is given in Table 2 below.

**Table 2**

| | Degree of methoxyl substitution (%) | Degree of hydroxypropoxyl substitution (%) | Methyl chloride efficiency (%) | Propylene oxide efficiency (%) | Water-insoluble substances (wt%) |
|---|---|---|---|---|---|
| Example 1 | 28.5 | 6.5 | 61.2 | 62.5 | 0.015 |
| Example 2 | 28.9 | 6.7 | 61.6 | 62.7 | 0.011 |
| Example 3 | 29.0 | 6.6 | 61.6 | 62.5 | 0.017 |
| Example 4 | 29.0 | 7.5 | 61.6 | 67.5 | 0.018 |
| Example 5 | 28.6 | 6.9 | 61.2 | 65.4 | 0.012 |
| Example 6 | 28.7 | 6.8 | 61.4 | 65.3 | 0.017 |
| Example 7 | 28.8 | 7.0 | 61.5 | 66.5 | 0.013 |
| Example 8 | 29.1 | 7.5 | 61.8 | 67.7 | 0.016 |
| Comp. Example 1 | 26.1 | 3.5 | 41.3 | 22.1 | 1.02 |
| Comp. Example 2 | 27.9 | 6.3 | 31.3 | 19.5 | 0.91 |
| Comp. Example 3 | 20.8 | 4.2 | 45.2 | 16.7 | 1.95 |

As seen in Table 2, Examples 1 to 8 show a uniform degree of substitution, a content of water-insoluble substances of 0.02 wt% or less, a degree of methoxyl substitution of 15-35 %, a degree of hydroxypropoxyl substitution of 2-30 %, a methyl chloride efficiency of 60-70 % and a propylene oxide efficiency of 60-75 %. Thus, highly substituted hydroxypropylmethylcellulose can be obtained with high yield in accordance with the present invention.

As apparent from the above, the present invention solves the problems raised in the prior art of long production time and complicated production by adding an alkali metal hydroxide and an alkyl halide separately with controlled proportion. As a result, the production process became simplified and an ideal degree of substitution was attained. The present invention is highly economical and environment-friendly because waste of the reactants can be greatly reduced.

While the present invention has been described in detail with reference to the preferred embodiments, those skilled in the art will appreciate that various modifications and substitutions can be made thereto.

## Claims

1. A method of preparing hydroxyalkylalkylcellulose by reacting cellulose with an etherification agent, which comprises:
performing a first reaction by adding 0.5-4 moles of an alkali metal hydroxide per 1 mole of cellulose and agitating the mixture, adding 0.5-3 moles of an alkylene oxide per 1 mole of the cellulose and adding 50 to 90 wt% of alkyl halide with reference to the total amount of alkyl halide added through the first and second reactions; and
performing a second reaction by adding 1-4 moles of an alkali metal hydroxide per 1 mole of the cellulose, dispersing the mixture and then adding the remainder of the total amount of alkyl halide added through the first and second reactions.

2. The method of preparing hydroxyalkylalkylcellulose according to Claim 1, wherein said reaction is performed at 60-110 °C and said second reaction is performed at 70-120 °C.

3. The method of preparing hydroxyalkylalkylcellulose according to Claim 1, wherein said alkylene oxide has 2-5 carbon atoms in the alkylene group.

4. The method of preparing hydroxyalkylalkylcellulose according to Claim 1, wherein said alkyl halide has 1-24 carbon atoms in the alkyl group.

5. The method of preparing hydroxyalkylalkylcellulose according to Claim 1, wherein the efficiency of said alkylene oxide is 60-75 %.

6. The method of preparing hydroxyalkylalkylcellulose according to Claim 1, wherein the efficiency of said alkyl halide is 60-70 %.

## Patentansprüche

1. Verfahren zur Herstellung von Hydroxyalkylalkylcellulose durch Umsetzen von Cellulose mit einem Veretherungsmittel, wobei man folgende Schritte ausführt:
Durchführen einer ersten Reaktion durch Hinzufügen von 0,5-4 mol eines Alkalimetallhydroxids pro 1 mol der Cellulose und Umrühren der Mischung, Hinzufügen von 0,5-3 mol eines Alkylenoxids pro 1 mol der Cellulose und Hinzufügen von 50 bis 90 Gew.-% Alkylhalogenid in Bezug auf die Gesamtmenge des während der ersten und der zweiten Reaktion hinzugefügten Alkylhalogenids, und
Durchführen einer zweiten Reaktion durch Hinzufügen von 1-4 mol eines Alkalimetallhydroxids pro 1 mol der Cellulose, Dispergieren der Mischung und dann Hinzufügen des Rests der Gesamtmenge des während der ersten und der zweiten Reaktion hinzugefügten Alkylhalogenids.

2. Verfahren zur Herstellung von Hydroxyalkylalkylcellulose nach Anspruch 1, wobei die Reaktion bei 60-110° C durchgeführt wird und die zweite Reaktion bei 70-120° C durchgeführt wird.

3. Verfahren zur Herstellung von Hydroxyalkylalkylcellulose nach Anspruch 1, wobei das Alkylenoxid 2-5 Kohlenstoffatome in der Alkylengruppe aufweist.

4. Verfahren zur Herstellung von Hydroxyalkylalkylcellulose nach Anspruch 1, wobei das Alkylhalogenid 1-24 Kohlenstoffatome in der Alkylgruppe aufweist.

5. Verfahren zur Herstellung von Hydroxyalkylalkylcellulose nach Anspruch 1, wobei der Wirkungsgrad des Alkylenoxids 60-75 % ist.

6. Verfahren zur Herstellung von Hydroxyalkylalkylcellulose nach Anspruch 1, wobei der Wirkungsgrad des Alkylhalogenids 60-70 % ist.

## Revendications

1. Procédé de préparation d'hydroxyalkylalkylcellulose par réaction de cellulose avec un agent d'éthérification, qui comprend les étapes consistant à :
effectuer une première réaction en ajoutant 0,5 à 4 moles d'un hydroxyde de métal alcalin pour 1 mole de cellulose et en agitant le mélange, ajouter 0,5 à 3 moles d'un oxyde d'alkylène pour 1 mole de la cellulose et ajouter 50 à 90 % en poids d'un halogénure d'alkyle en se référant à la quantité totale d'halogénure d'alkyle ajoutée au cours des première et seconde réactions ; et
effectuer une seconde réaction en ajoutant 1 à 4 moles d'un hydroxyde de métal alcalin pour 1 mole de la cellulose, disperser le mélange et ajouter ensuite le restant de la quantité totale d'halogénure d'alkyle ajoutée au cours des première et seconde réactions.

2. Procédé de préparation d'hydroxyalkylalkylcellulose selon la revendication 1, dans lequel ladite réaction est effectuée à une température de 60 à 110 °C et ladite seconde réaction est effectuée à une température de 70 à 120 °C.

3. Procédé de préparation d'hydroxyalkylalkylcellulose selon la revendication 1, dans lequel ledit oxyde d'alkylène a 2 à 5 atomes de carbone dans le groupement alkylène.

4. Procédé de préparation d'hydroxyalkylalkylcellulose selon la revendication 1, dans lequel ledit halogénure d'alkyle a 1 à 24 atomes de carbone dans le groupement alkyle.

5. Procédé de préparation d'hydroxyalkylalkylcellulose selon la revendication 1, dans lequel le rendement dudit oxyde d'alkylène est de 60 à 75 %.

6. Procédé de préparation d'hydroxyalkylalkyl-cellulose selon la revendication 1, dans lequel le rendement dudit halogénure d'alkyle est de 60 à 70 %.
